Europäisches Patentamt

European Patent Office

Office européen des brevets

(11) Publication number: **0 245 878**
**A2**

## (12) EUROPEAN PATENT APPLICATION

(21) Application number: 87107384.7

(22) Date of filing: 17.01.83

(51) Int. Cl.⁴: **A61C 13/30** , A61C 5/02

(43) Date of publication of application:
**19.11.87 Bulletin 87/47**

(60) Publication number of the earlier application in accordance with Art.76 EPC: **0 113 792**

(84) Designated Contracting States:
**AT CH DE FR GB IT LI SE**

(71) Applicant: **Gebr. Brasseler GmbH & Co. KG**
**Trophagener Weg 25**
**D-4920 Lemgo(DE)**

(72) Inventor: **Lustig, Leopold Paul**
**304 Greenwood Street**
**Newton Center Massachusetts 02159(US)**
Inventor: **Rosen, Alfred H.**
**3546 S. Ocean Blvd.**
**Palm Beach Florida 33480(US)**

(74) Representative: **Modiano, Guido et al**
**MODIANO, JOSIF, PISANTY & STAUB**
**Modiano & Associati Via Meravigli, 16**
**I-20123 Milan(IT)**

(54) Atraumatic endodontic reconstruction system and process.

(57) The invention achieves its purposes with a combination of a grommet thimble (10), adapted for fitting into and lining the entrance portion of the root canal (14) of a tooth (16), and a reconstruction pin (90), adapted to be installed in the root canal (14). The grommet thimble (10) has an inner bore having a diameter which is at least as large as the diameter of the root canal (14), and the reconstruction pin (90) comprises a support portion (94) adapted to fit mating-wise into the inner bore for supporting the reconstruction pin (90) in the grommet thimble (10). The reconstruction pin (90) also comprises a canal portion (91), extending from the support portion (94) for penetrating a root canal (14) to a prescribed depth measured from the grommet thimble (10).

## ATRAUMATIC ENDODONTIC RECONSTRUCTION SYSTEM AND PROCESS

In the setting of endodontic posts in root canals for support of reconstruction it is important to provide a sanitary environment for the preparation of root canals and following procedures, and equally important to prevent cracking or splitting of the root. This invention relates to a new endodontic reconstruction system which is both therapeutic and protective and atraumatic in use.

Recent years have seen an emphatic surge of using root canal therapy as a means of retaining teeth which otherwise would have to be extracted. Problems of how best to strengthen the endodontically treated tooth to make it a viable component of the mouth are the factors limiting the use of root canal therapy. It is recognized to be a sound, preventive measure to reinforce endodontically treated teeth; and reinforcement is considered mandatory if these teeth are to be crowned or serve as abutments. Preventing fracture is less expensive than replacing a fractured tooth. A pulpless tooth becomes brittle, and use of threaded dowels often fractures the root. A precision fitting dowel has a tendency to exert lateral forces when it is cemented. These problems among others are described in the current literature, of which the following articles are representative:

1. "An endodontic-prosthodontic approach to internal tooth reinforcement"-Sapone and Lorencki- The Journal of Prosthetic Dentistry Vol. 45, No.2, Feb. 1981, pages 164-174;

2. "In vitro analysis of self-shearing retentive pins"-Collard, Caputo, Standlee, and Duncanson- The Journal of Prosthetic Dentistry Vol. 45, No. 2, Feb. 1981, pages 156-159.

Known from FR-A-2,385,383 is a grommet thimble which can be used in preparing a root canal for endodontic reconstruction of the tooth. This grommet thimble comprises a tubular body of solid material, having an outer diameter greater than the diameter of the root canal for fitting into and lining an entrance hole of larger bore than the root canal in the entrance portion of the canal. The tubular body has an inner bore, the diameter of which is as large as the inner diameter of the root canal, thereby giving access to the root canal for purposes such as preparation and reconstruction. A support pin is insertable into the inner bore to provide support for a dental prothesis.

However, such an arrangement is not devoid of inconveniences.

From the standpoint of endodontic practice, care must be exercised during mechanical instrumentation if showers of bacteria are not to be forced through the apical foramen. The root canal surface must be thoroughly sterilized and filled if toxic effect upon the periapical tissue is to be prevented. It is recognized that if the root canal surface is rendered sterile and the canal is well-filled, repair of destroyed periapical bone will take place, and the pulpless tooth need not be looked upon as a hazard to health. In order to maintain a sterile operating technique, the rubber dam is used. It is said to be the only sure safeguard against bacterial contamination from saliva. The currently known practice for using a rubber dam is to isolate the entire tooth containing the root canal to be treated, with attendant injury to surrounding gingiva during the placement of a clamp for the rubber dam.

The present invention provides solutions to both problems - that of preventing fracture or splitting roots containing the canal to be treated, and that of isolating that root canal from infection - with a new endodontic reconstruction system which is both therapeutic and atraumatic in use. In general the invention provides In combination, a grommet thimble (10, 10.1, 80) for use in preparing the root canal (14) of a tooth (16) for endodontic reconstruction of said tooth (16), and a reconstruction pin (70) adapted to be installed in said root canal (14), said grommet thimble (10, 10.1, 80) comprising a tubular body of solid material having an outer diameter greater than the diameter of said root canal (14) for fitting into and lining an entrance hole of larger bore than the root canal (14) in the entrance portion (12) of the canal (14), said tubular body having an inner diameter which is at least as large as the inner diameter of said root canal (14), said reconstruction pin (70) comprising a support portion (74) adapted to fit mating-wise into said inner bore of said tubular body for supporting said reconstruction pin (70) in said grommet thimble (10, 10.1, 80), characterized in that said reconstruction pin (70) further comprises a canal portion (90), said canal portion (90) being of such a length that it extends from said support portion (74) for penetrating a prepared root canal (14) to a prescribed depth measured from said grommet thimble (10, 10.1, 80).

According to another aspect of the invention there is provided a reconstruction pin (70) suitable for co-operation with a grommet thimble for use in preparing a root canal (14) of a tooth (16) for endodontic reconstruction of said tooth (16), said reconstruction pin (70) including a support portion (74), adapted for supporting said reconstruction pin (70) in a grommet thimble, characterized in that it further comprises a canal portion (90), extending from said support portion (74) for penetrating a prepared root canal (14) to a prescribed depth.

The invention is further illustrated through a description of presently-preferred embodiments which follows.

Fig. 1 shows a grommet thimble for use in combination with a reconstruction pin according to the invention;

Fig. 2 shows a root canal in a tooth prepared to receive a grommet thimble in its entrance portion;

Fig. 3 shows a tool useful to prepare the entrance portion of a root canal as is shown in figure 2;

Fig. 4 shows another grommet thimble for use in combination with a reconstruction pin according to the invention;

Fig. 5 is an axial section through figure 4;

Fig. 6 shows a grommet thimble for use in combination with a reconstruction pin according to the invention, as fitted with retaining means for a sanitary dam;

Fig. 7 shows another grommet thimble for use in combination with a reconstruction pin according to the invention, as fitted with removable retaining means for a sanitary dam;

Fig. 8 is a transverse section taken on line 8-8 of figure 6;

Fig. 9 is a sanitary dam clamp useable to place a dam on the grommet thimble of figure 6;

Fig. 9A shows another sanitary dam clamp;

Fig. 10 shows a grommet thimble according to figure 6 installed in a root canal retaining a sanitary dam at the entrance to the root canal, prior to the introduction of a reconstruction pin;

Fig. 11 shows a reconstruction pin according to the invention, with a transfer sleeve;

Fig. 12 shows a reconstruction pin threadedly engageable in a grommet thimble;

Fig. 13 shows another grommet thimble for use in combination with a reconstruction pin according to the invention; and

Fig. 14 shows an assembly of a pin and a grommet thimble in a root canal, wherein certain additional capabilities of the invention are illustrated.

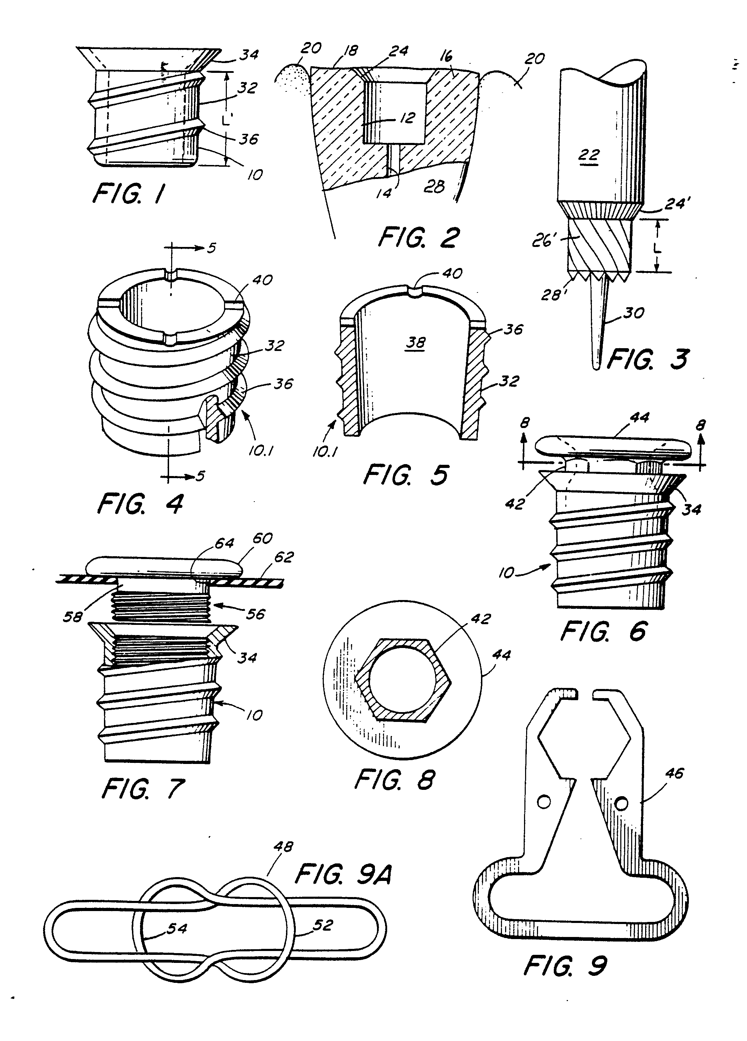

The grommet thimble 10 which is shown in figure 1 is intended to be fitted into the entrance portion 12 of (e.g.) the root canal 14 which is shown in figure 2. The tooth 16 has been smoothed off at the surface 18 essentially flush with the level of the surrounding gum tissue 20.

The entrance portion 12 is bored out to a diameter wider than the root canal 14, using a special tool 22 such as is illustrated in figure 3. With this tool a bevel 24 is formed at the outer margin of the entrance portion 12, using the bevel-grinder 24'. The main body 26' of the tool grinds the entrance portion 12 to the desired diameter. The bottom teeth 28' grind a shelf 28 at the bottom of the entrance portion. A smooth centering guide 30 of the tool fits in the canal 14 and centers the tool for preparing the wide opening in the entrance portion 12.

The grommet thimble 10 is a sleeve which lines the entrance bore 12. It is fitted with a flared band 34 at its outer end, for engaging the bevel 24 when the sleeve is fully seated in the entrance portion 12. The outer side surface 32 of the sleeve may be fitted with self-tapping threads 36, so that the grommet thimble may be screwed into the entrance portion 12 of the root canal.

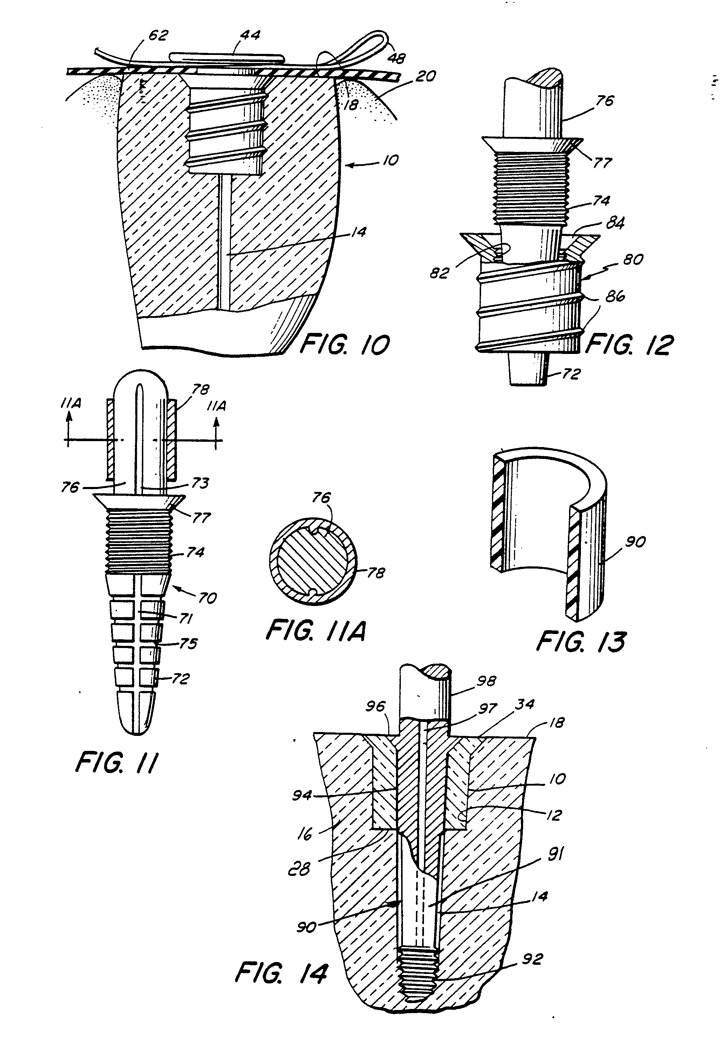

Figure 4 and 5 show a grommet thimble 10.1 which is similar to the thimble 10 of figure 1 but lacks the flared band 34. The inner surface 38 is shown smooth but as will be seen in figures 11 and 12 the inner surface can be threaded, if desired. Slots 40 at the outer edge are provided to engage a screwdriver; similar screwdriver engagement means may be provided in figure 1.

Figure 6 shows a grommet thimble 10 of the type disclosed in the applicants' co-pending Published European Patent Application No. 0 113 792, as fitted at its outer periphery with a collar 42 and an outwardly flared ring 44 under which a sanitary dam (shown in figure 10) can be retained at the entrance to the root canal 14. The collar has for example a hexagonal outer periphery shown in figure 8, for cooperating with a clamp 46 shown in figure 9. Fig. 9A shows another form of clamp 48 made of two U-shaped wire components 52, 54 cooperating ion the manner of a square knot, which is adjustable to form a loop around the collar 42.

As is shown in figure 7, the grommet thimble 10 of the type disclosed in the applicants' co-pending published European Patent Application No. 0 113 792, can be internally threaded at its outer end, and a dam retainer 56 can be removably fitted to it. This retainer has a round collar 58 which can be threaded into the thimble-sleeve, and flared ring 60. A sanitary (e.g rubber) dam 62 has a small perforation 64 through which the collar 58 is fitted and then screwed into the grommet thimble 10, retaining the dam between the flared end 34 and the flared ring 60.

As is shown in figure 10, when a grommet thimble 10 of the type disclosed in the applicants' co-pending European Patent Application N. 0 113 792, with fixed retainer means 42, 44 according to figure 6 is used the dam 62 is slipped over the flared ring 44 and is held down on the tooth with a clamp such as the clamp 46 shown in figure 9. In either case, Fig. 10 or Fig. 7, the dam 62 is held in place by retainer means fitted to the grommet thimble 10, and it isolates the root canal from the outer surface 18 of the tooth and from the surrounding tissue 20, without the need to isolate the entire tooth or to involve the surrounding gingiva in the clamping procedure. Once in place, the grommet thimble 10 ( or 10.1 or other) protects the surrounding dentin mechanically. The root canal 14 can be prepared through it, and it can accommodate a removable seal or a cap (not shown) to function as a temporary plug for protecting the root canal from infection and maintaining asepsis of the canal during interruption of the reconstruction procedure. After the root canal has been prepared, the grommet thimble, or a substitute, can be used to retain or support a reconstruction post, or the like in place in the root canal.

Figures 11 and 11A show a reconstruction post 70 which can be used in practising the invention. This post has an intra-coronal pin 72 for fitting inside the canal 12, an externally threaded support body 74 intended to be threaded into an internally-threaded grommet thimble 10 (fig. 7) and 80 (as is shown in figure 12 and described following), and an extra-coronal part 76 which is shown fitted with an optional transfer sleeve 78. Vent-grooves 71, 73 are fitted to the pin 70, as well as depth-gauge grooves 75. The support body 74 has a flared top seal 77, for seating on the flared band 84 of the grommet thimble 80 when the support body is fully threaded into the grommet thimble, and thereby sealing the opening to the root canal. The grommet thimble 80 has external self-tapping threads 86 for engaging in the tooth dentin like the grommet thimble 10 as shown in figure 10. The internal threads 82 engage the threads of the support body 74 of the pin 70, and in this manner the pin 70 is fastened into a root canal such as the canal 14 shown in figure 10, and the opening into the canal is sealed with the top seal 77. The finished installation will be similar to that shown in Figure 14. A reconstruction can be built on the extra-coronal portion 76 in any desired fashion; the invention facilitates use of a transfer sleeve 78, if desired.

Grommet thimbles, such as, for example, those disclosed in the applicants' co-pending published European Patent Application N. 0 113 792, useful to support a reconstruction pin according to the invention can be made of any desired material. Figure 13 shows a grommet thimble 90 which is made of a simple sleeve of a ceramic or like material, roughened but not threaded on its inner or outer surface.

This sleeve can be cemented into the entrance portions 12 of a root canal 14, and a reconstruction pin can be cemented into it. Such a sleeve can facilitate the use of core-paste reconstructions, and can give added strength to a crown or jacket which is supported on a core-paste reconstruction.

Figures 6, 8, and 14 show a grommet thimble 10 which is smooth internally cooperating to support, but not to retain in place, a reconstruction pin 90 in the root canal 14.

External threads are not shown on the grommet thimble 10 of figure 14, but it will be understood that such threads may be present if desired. The pin 90 has an intra-coronal part 91 which has threads 92 at its lower extremity, by which the pin is engaged into the dentin. The support body 94 is without threads on its outer surface, and fits slidingly within the grommet thimble 10, where it can be cemented in place if desired. A top seal 96 engages the flared band 34 when the pin is seated by the threads 92. The extra-coronal part 98 is available to support a dental reconstruction.

The pin 90 has an axial bore 97 running from the extra-coronal part 98 through the support body 94 and the intra-coronal part 91 to the bottom of the root canal 14 when the pin is in place in the root canal. This bore can be used for augmentation of retention, as well as for venting, or for treatment purposes. If the intra coronal part 91 is made of a light-transmissive material, or if light is passed through the bore 97, dental materials which can be light-activated (e.g. by U.V. light) can be used to form solid seals at the bottom of the root canal, and to retain a reconstruction pin in the root canal. The threads 92 can be engaged in such a seal, as an alternative to threading them into the dentin.

The invention achieves its purposes with a grommet thimble incorporating a bore sleeve which may be fitted with retainer means for a sanitary dam. When this thimble is fitted into the specially-prepared entrance portion of a root canal, the retainer means extends from the tooth for holding a dam of rubber or the like without injury to surrounding gingiva during placement of a clamp for the rubber dam. The root canal can be prepared with the sleeve and dam in place, the sleeve and dam serving to facilitate the establishment and maintenance of a sterile field of operation without creation of unnecessary lacerations on the surrounding gingiva. After completion of the desired preparation procedure, or of partial completion, a temporary plug can be removably fitted into the sleeve for protection of the work done or in process. For completion of a restoration several options are available. The retainer means can be left in place and used to anchor a core with or without a post. Alternatively a post can be fastened (e.g. screwed) into the sleeve, with or without keeping the retainer means: The latter procedure has been illustrated, but it will be understood that the former procedure is also possible, in which case paste-like materials which are self-hardening (e.g. corepaste) can be used.

## Claims

1. In combination, a grommet thimble for use in preparing the root canal of a tooth for endodontic reconstruction of said tooth, and a reconstruction pin adapted to be installed in said root canal, said grommet thimble comprising a tubular body of solid material having an outer diameter greater than the diameter of said root canal for fittinginto and lining an entrance hole of larger bore than the root canal in the entrance portion of the canal, said tubular body having an inner diameter which is at least as large as the inner diameter of said root canal, said reconstruction pin comprising a support portion adapted to fit mating-wise into said inner bore of said tubular body for supporting said reconstruction pin in said grommet thimble, characterized in that said reconstruction pin further comprises a canal portion, said canal portion being of such a length that it extends from said support portion for penetrating a prepared root canal to a prescribed depth measured from said grommet thimble.

2. A combination according to claim 1 characterized in that said grommet thimble (10, 10.1, 80,) has a substantially smooth inner bore (38).

3. A combination according to claim 1 characterized in that said grommet thimble (10, 10.1, 80,) has a roughened surface on its inner bore.

4. A combination according to claim 1, 2, or 3 characterized in that said grommet thimble (10, 10.1, 80,) further comprises screw threads (60) on its outer tubular surface for threadedly fixing said thimble (10, 10.1, 80,) in said entrance hole.

5. A combination according to claim 1 characterized in that said grommet thimble (10, 10.1, 80,) has a screw threaded inner bore (82), for engaging said reconstruction pin (70) having corresponding screw threads on the outer periphery of its support portion (74), for engaging said reconstruction pin (70) in said grommet thimble (10, 10.1, 80) with capability to adjust the penetration onto said canal (14) of said canal portion (90) of said reconstruction pin (70).

6. A reconstruction pin suitable for co-operation with a grommet thimble for use in preparing a root canal of a tooth for endodontic reconstruction of said tooth, said reconstruction pin including a support portion, adapted for supporting said reconstruction pin in a grommet thimble, characterized in that it further comprises a canal portion, extending from said support portion for penetrating a prepared root canal to a prescribed depth.

7. A combination of a grommet thimble and a reconstruction pin according to claim 1, or a reconstruction pin (70) according to claim 6 characterized in that it comprises screw threads on the outer periphery of its support portion (74), for engaging said reconstruction pin (70) in a grommet thimble (10, 10.1, 80) with capability to adjust the penetration into said canal (14) of said canal portion (90) of said reconstruction pin (70).

8. A combination of a grommet thimble and a reconstruction pin according to claim 1 or 5, or a reconstruction pin (70) according to claim 6 or 7 characterized in that it includes means (76, 98) for supporting an extra-coronal reconstruction.

9. A combination of a grommet thimble and a reconstruction pin according to claim 1 or 5, or a reconstruction pin according to claim 6, 7, or 8 characterized in that said canal portion (90) has means (92) at its apical end for engaging in the bottom of said prepared root canal (14), and preferably, wherein said apical end of said reconstruction pin (70) is threaded.

10. A combination of a grommet thimble and a reconstruction pin according to claim 1, or a reconstruction pin according to claim 6 characterized in that said support portion (74) is free of engagement means for fitting slidingly within an inner bore of a grommet thimble.

11. A combination of a grommet thimble and a reconstruction pin according to claim 1 or 5, or a reconstruction pin (70) according to one or more of claims 6, 7 or 9 characterized in that at least said canal portion (90) is axially hollow.

12. A combination of a grommet thimble according to one or more of claims 1 to 5, or a reconstruction pin (70) according to one or more of claims 6 to 11 characterized in that it is adapted to conduct light in the range including at least the visible and ultraviolet frequency bands.

FIG. 1

FIG. 2

FIG. 3

FIG. 4

FIG. 5

FIG. 6

FIG. 7

FIG. 8

FIG. 9A

FIG. 9

FIG. 10

FIG. 12

FIG. 11A

FIG. 13

FIG. 11

FIG. 14